# EUROPEAN PATENT SPECIFICATION

(11) **EP 2 674 456 B1**
(45) Date of publication and mention of the grant of the patent: **01.11.2017**
(21) Application number: 12744729.0
(22) Date of filing: 09.02.2012
(51) Int. Cl.: C08L 15/00, B60C 1/00, C08C 19/25, C08J 3/20, C08K 3/36, C08K 5/098, C08L 9/06, C08C 19/44, C08L 25/10

(54) **RUBBER COMPOSITION, METHOD FOR PRODUCING SAME, AND TIRE**
KAUTSCHUKZUSAMMENSETZUNG, VERFAHREN ZU IHRER HERSTELLUNG UND REIFEN
COMPOSITION DE CAOUTCHOUC, SON PROCÉDÉ DE PRODUCTION, ET PNEUMATIQUE

(30) Priority: 09.02.2011 JP 2011026042
(43) Date of publication of application: 18.12.2013
(73) Proprietor: JSR Corporation, Tokyo 105-8640 (JP)
(72) Inventor: SHIBATA, Masahiro, Tokyo 105-8640 (JP); OKADA, Koji, Tokyo 105-8640 (JP)
(74) Representative: TBK
(86) International application number: PCT/JP2012/052928
(87) International publication number: WO 2012/108488

(56) References cited:
- EP-A1- 1 505 087
- EP-A1- 1 577 341
- EP-A2- 2 009 048
- DE-A1-102005 044 998
- JP-A- 2005 008 870
- US-A1- 2002 082 333
- US-A1- 2010 130 663
- US-A1- 2011 003 932

## Description

### Technical Field

The present invention relates to a rubber composition and a method for producing the same, and a tire, and more particularly, for example, to a rubber composition suitable for tire tread use and a method for producing the same, and a tire obtained from the rubber composition.

### Background Art

As a rubber composition used for tire treads of automobiles, there has conventionally been known one in which carbon black is blended as a reinforcing agent together with a rubber component composed of a conjugated diene rubber.

Further, with a recent increasing demand for a reduction in fuel consumption of automobiles, in order to comply with such a demand, for the purpose of a reduction in rolling resistance of tires, silica has been used as a reinforcing agent.

Then, in the rubber composition in which silica is blended as the reinforcing agent, the silica particles are liable to coagulate with each other and uniformly dispersion is difficult in the composition. Accordingly, in order to solve such a problem, various proposals have been made (for example, see Patent Document 1 and Patent Document 2).

### Prior Art Documents

### Patent Documents

Patent Document 1: JP-A-2010-95724
Patent Document 2:. WO02/00779
EP 1 505 087 A1, DE 10 2005 044 998 A1, US 2011/003932 A1 and US 2002/082333 A1 disclose further rubber compositions.

### Summary of the Invention

### Problems to be Solved by the Invention

Then, inventors of the present invention have made intensive studies of rubber compositions in which silica is blended as a reinforcing agent. As a result, it has become clear that when dispersibility of silica in the rubber compositions is excessively increased, there is a problem of failing to obtain sufficient impact resilience in rubber elastic bodies obtained from the rubber compositions.

The present invention has been made on the basis of the circumstances as described above, and an object thereof is to provide a rubber composition that can obtain a rubber elastic body having small rolling resistance and moreover excellent impact resilience and a method for producing the same.

Further, another object of the present invention is to provide a tire having small rolling resistance and moreover excellent impact resilience.

### Means for Solving the Problems

A method for producing a rubber composition of the present invention comprises kneading a rubber component comprising a conjugated diene polymer having a functional group bondable to silica, an acylate compound containing metal and silica, wherein
a polymer having no functional group bondable to silica is kneaded as a rubber component other than the conjugated diene polymer, together with the conjugated diene polymer having a functional group bondable to silica, the acylate compound containing metal and the silica, and wherein
the polymer having no functional group bondable to silica, a part or the whole of the silica used and the acylate compound containing metal are kneaded, and thereafter the conjugated diene polymer having a functional group bondable to silica is added thereto, followed by kneading.

In the method for producing a rubber composition of the present invention, it is preferable that the functional group bondable to silica in the conjugated diene polymer is at least one group selected from the group consisting of a hydrocarbyloxysilyl group, a primary amino group, a secondary amino group, a tertiary amino group, a thiol group, an epoxy group, a thioepoxy group, an oxetane group, a hydrocarbylthio group and a group that can form an onium with an onium-forming agent.

Additionally, in the method for producing a rubber composition of the present invention, it is preferable that the acylate compound containing metal is a compound represented by the following formula (1) or the following formula (2):

Formula (1): M¹-(OCOR¹)ₙ

(In the Formula (1), M¹ represents a divalent to tetravalent metal atom, R¹ represents a hydrocarbon group having 1 to 20 carbon atoms, and n is an integer of 2 to 4.),

Formula (2): O=M²-(OCOR²)₂

(In the Formula (2), M² represents a tetravalent metal atom, and R² represents a hydrocarbon group having 1 to 20 carbon atoms.)

A rubber composition of the present invention is obtained by kneading a rubber component comprising a conjugated diene polymer having a functional group bondable to silica, an acylate compound containing metal and silica, wherein the rubber composition of the present invention is obtained by kneading a polymer having no functional group bondable to silica, as a rubber component other than the conjucated diene polymer, a part or the whole of the silica used and the acylate compound containing metal, and thereafter adding thereto the conjugated diene polymer having a functional group bondable to silica, followed by kneading.

In the rubber composition in the present invention, it is preferable that the functional group bondable to silica in the conjugated diene polymer is at least one group selected from the group consisting of a hydrocarbyloxysilyl group, a primary amino group, a secondary amino group, a tertiary amino group, a thiol group, an epoxy group, a thioepoxy group, an oxetane group, a hydrocarbylthio group and a group that can form an onium with an onium-forming agent.

Additionally, in the rubber composition of the present invention, it is preferable that the acylate compound containing metal is a compound represented by the above formula (1) or the above formula (2).

A tire of the present invention comprises a tread obtained from the above rubber composition.

### Effect of the Invention

According to a method for producing a rubber composition of the present invention, a rubber component comprising a conjugated diene polymer having a functional group bondable to silica, an acylate compound containing metal and silica are kneaded. Therefore, the functional group in the conjugated diene polymer is bonded to silica, thereby improving dispersibility of silica. At the same time, silanol groups in the silica are condensed among the silica with the acylate compound containing metal, thereby forming a silica aggregate. As a result, silica is suppressed from being excessively dispersed.

According to the rubber composition of the present invention, since the conjugated diene polymer having the functional group bondable to silica is contained as the rubber component, the functional group is bonded to silica, thereby improving dispersibility of silica. Moreover, since the acylate compound containing metal is contained, the silanol groups in the silica are condensed among the silica, thereby forming the silica aggregate. As a result, silica is suppressed from being excessively dispersed. Therefore, a rubber elastic body having small rolling resistance and moreover excellent impact resilience can be obtained.

Accordingly, the rubber composition of the present invention is suitable as a rubber composition for obtaining tire treads.

### Modes for Carrying Out the Invention

Modes for carrying out the present invention will be described below.

A rubber composition of the present invention is one in which at least component (B) composed of an acylate compound containing metal and component (C) composed of silica are added to a rubber composition containing component (A) composed of a conjugated diene polymer (hereinafter referred to as a "conjugated diene polymer containing a specific functional group(s)") having a functional group (hereinafter referred to as a "specific functional group") bondable to silica. Further, in the rubber composition of the present invention, component (D) composed of a polymer containing no specific functional group is contained as a rubber component other than component (A), together with component (A) to component (C) described above, according to necessity.

### <Component (A)>

The conjugated diene polymer containing a specific functional group(s) as component (A) constitutes the rubber component in the rubber composition of the present invention. The conjugated diene polymer containing a specific functional group(s) can remove a low-molecular-weight component that causes deterioration in rolling resistance, since its molecular weight distribution is easily controlled.

In such conjugated diene polymer containing a specific functional group(s), a copolymer of a conjugated diene compound and an aromatic vinyl compound can be used as the conjugated diene polymer acting as a base polymer.

As the conjugated diene compounds, 1,3-butadiene, isoprene, 1,3-pentadiene, 2,3-dimethyl-1,3-butadiene, 2-phenyl-1,3-butadiene, 1,3-hexadiene and the like may be used either alone or as a combination of two or more thereof. Of these, 1,3-butadiene, isoprene and 2,3-dimethyl-1,3-butadiene are preferable.

Further, as the aromatic vinyl compounds, styrene, α-methylstyrene, 1-vinylnaphthalene, 3-vinyltoluene, ethylvinylbenzene, divinylbenzene, 4-cyclohexylstyrene, 2,4,6-trimethylstyrene, tert-butoxydimethylsilylstyrene, isopropoxydimethylsilylstyrene and the like may be used either alone or as a combination of two or more thereof. Of these, styrene is preferable.

Preferred specific examples of the conjugated diene polymers acting as the base polymer include butadiene polymers, styrene-butadiene copolymers, butadiene-isoprene copolymers, styrene-isoprene copolymers, styrene-butadiene-isoprene copolymers and the like.

In the conjugated diene polymer containing a specific functional group(s), the specific functional group is not particularly limited, as long as it is bondable (including covalent bonding, hydrogen bonding and an interaction by molecular polarity) to a silanol group in silica, and for example, a hydrocarbyloxysilyl group, a primary amino group, a secondary amino group, a tertiary amino group, a thiol group, an epoxy group, a thioepoxy group, an oxetane group, a hydrocarbylthio group and a group that can form an onium with an onium-forming agent can be used. However, at least one group selected from the group consisting of a hydrocarbyloxysilyl group, a primary amino group, a secondary amino group and a group that can form an onium with an onium-forming agent is preferable, since rolling resistance of a rubber elastic body composed of the resulting rubber composition is sufficiently reduced. Further, a primary amino group, a secondary amino group or the like may be contained as a substituent group of a hydrocarbyloxysilyl group.

Further, the groups that can form oniums with onium-forming agents include phosphorus-containing groups such as a phosphino group, sulfur-containing groups such as a thiol group, and the like.

Furthermore, as the onium-forming agents, metal halide compounds such as silicon halide compounds such as silicon tetrachloride, trimethylsilyl chloride, dimethyldichlorosilane, methyltrichlorosilane and methyldichlorosilane, tin halide compounds such as tin tetrachloride, aluminum halide compounds such as diethylaluminum chloride, ethylaluminum sesquichloride and ethylaluminum dichloride, titanium halide compounds such as titanium tetrachloride and titanocene dichloride, zirconium halide compounds such as zirconium tetrachloride and zirconocene dichloride, germanium halide compounds such as germanium tetrachloride, gallium halide compounds such as gallium trichloride, and zinc halide compounds such as zinc chloride; ester compounds such as diethyl sulfate, dimethyl sulfate, magnesium laureth sulfate, trimethyl phosphate, triethyl phosphate, tributyl phosphate, 2-ethylhexyl phosphate, triphenyl phosphate, tricresyl phosphate, dimethyl carbonate, diethyl carbonate, ethylene carbonate, propylene carbonate, nitrocellulose, nitroglycerine and nitroglycol; inorganic acids such as hydrofluoric acid, hydrochloric acid, hydrobromic acid, hydroiodic acid, sulfuric acid, nitric acid, carbonic acid and phosphoric acid; inorganic acid salts such as potassium fluoride, tetramethylammonium fluoride, tetra-n-butylammonium fluoride; and organic acids such as carboxylic acids and sulfonic acids can be used.

Methods for introducing the specific functional group into the conjugated diene polymer as the base polymer include a method of polymerizing monomers for obtaining the conjugated diene polymer as the base polymer, for example, the conjugated diene compound and the aromatic vinyl compound, by living anion polymerization, and terminating the polymerization using a compound (hereinafter referred to as a "compound having a specific functional group(s)") having a specific functional group(s) as a polymerization terminator, a method of copolymerizing monomers for obtaining the conjugated diene polymer as the base polymer, for example, the conjugated diene compound and the aromatic vinyl compound, with a monomer (hereinafter referred to as a "monomer containing a specific functional group(s)") copolymerizable with a conjugated diene compound having a specific functional group(s), and the like.

Further, when the compound containing a specific functional group(s) or the monomer containing a specific functional group(s) having a primary amino group or a secondary amino group as the specific functional group is used, a hydrogen atom in the primary amino group or the secondary amino group may be substituted with a removable protective group, for example, a trihydrocarbylsilyl group having 1 to 10 carbon atoms.

Specific examples of the compounds containing a specific functional group(s) include N,N-bis(trimethylsilyl)aminopropylmethyldimethoxysilane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxy-silane, N,N-bis(trimethylsilyl)aminoethylmethyldimethoxysilane, N,N-bis(trimethylsilyl)aminoethylmethyldiethoxysilane, N,N-bis(triethylsilyl)aminopropylmethyldimethoxysilane, N,N-bis(triethylsilyl)aminopropyltrimethoxysilane, N,N-bis(triethylsilyl)aminopropyltriethoxysilane, N,N-bis(triethylsilyl)aminopropylmethyldiethoxysilane, N,N-bis(triethylsilyl)aminopropyldimethylmethoxysilane, N,N-bis-(triethylsilyl)aminopropyldimethylethoxysilane, N,N-bis(triethylsilyl)aminoethyltri-methoxysilane, N,N-bis(triethylsilyl)aminoethyltriethoxysilane, N,N-bis(triethylsilyl)aminoethylmethyldimethoxysilane, N,N-bis(triethylsilyl)aminoethylmethyldiethoxysilane, N,N-bis(t-butyldimethylsilyl)aminopropyltrimethoxysilane, N,N-bis(t-butyldimethylsilyl)aminopropyltriethoxysilane, N,N-bis(t-butyldimethylsilyl)aminopropylmethyldimethoxysilane, N,N-bis(t-butyldimethylsilyl)aminopropylmethyldiethoxysilane, N,N-bis(t-butyldimethylsilyl)aminopropyldimethylmethoxysilane, N,N-bis(t-butyldimethylsilyl)aminopropyldimethylethoxysilane, and of these alkoxysilane compounds containing hydrocarbyloxysilyl group, in a compound in which amino sites are protected with a plurality of trialkylsilyl groups, an alkoxysilane compound in which the plurality of trialkylsilyl groups are partially substituted with a methyl group, an ethyl group, a propyl group or a butyl group;
bis[3-(triethoxysilyl)propyl]trimethylsilylamine, bis[3-(trimethoxysilyl)propyl]trimethylsilylamine, 3-dimethylaminopropyltrimethoxysilane, 3-diethylaminopropyltrimethoxysilane, 3-dimethylaminopropyltriethoxysilane, 3-di-ethylaminopropyltriethoxysilane, 3-ethylmethylaminopropyltrimethoxysilane, 3-ethylmethylaminopropyltriethoxysilane, 3-dimethylaminopropylmethyldimethoxysilane, 3-diethylaminopropylmethyldimethoxysilane, 3-dimethylaminopropylethyldimethoxysilane, 3-diethylaminopropylethyldimethoxysilane, 3-dimethylaminopropyldimethylmethoxysilane, 3-dimethylaminopropyldiethylmethoxysilane, 3-diethylaminopropyldimethylmethoxysilane, 3-diethylaminopropyldiethylmethoxysilane, 3-ethylmethylaminopropylmethyldimethoxy-silane, 3-methyl-3-ethylaminopropylethyldimethoxysilane, bis-(3-dimethylaminopropyl)-dimethoxysilane, bis-(3-ethylmethylaminopropyl)-diethoxysilane, bis-[(3-dimethylamino-3-methyl)propyl]-dimethoxysilane, bis-[(3-ethylmethylamino-3-methyl)propyl]-dimethoxysilane, 3-dimethylaminopropylmethyldiethoxysilane, 3-diethylaminopropylmethyldiethoxysilane, 3-dimethylaminopropylethyldiethoxysilane, 3-di-ethylaminopropylethyldiethoxysilane, 3-dimethylaminopropyldimethylethoxysilane, 3-dimethylaminopropyldiethylethoxysilane, 3-diethylaminopropyldimethylethoxysilane, 3-di-ethylaminopropyldiethylethoxysilane, 3-ethylmethylaminopropylmethyldiethoxysilane, 3-ethylmethylaminopropylethyldiethoxysilane, [3-(diethylamino)propyl]trimethoxysilane, [3-(dimethylamino)propyl]triethoxysilane, 3-di(methoxymethyl)aminopropyltrimethoxysilane, 3-di(methoxyethyl)aminopropyltrimethoxysilane, 3-di(methoxymethyl)aminopropyltriethoxysilane, 3-di(methoxyethyl)aminopropyltriethoxysilane, 3-di(ethoxyethyl)aminopropyltrimethoxysilane, 3-di(ethoxymethyl)aminopropyltrimethoxysilane, 3-di(ethoxyethyl)aminopropyltriethoxysilane, 3-di(ethoxymethyl)aminopropyltriethoxysilane, N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, N-(cyclohexylidene)-3-(trimethoxysilyl)-2-propaneamine, N-(cyclohexylidene)-3-(methyldiethoxysilyl)-3-propaneamine and N-(cyclohexylidene)-3-(ethyldimethoxysilyl)-4-propaneamine;
N,N',N'-tris(trimethylsilyl)-N-(2-aminoethyl)-3-aminopropyltriethoxysilane, N,N',N'-tris(trimethylsilyl)-N-(2-aminoethyl)-3-aminopropylmethyldiethoxysilane, N,N',N'-tris(trimethylsilyl)-N-(2-aminoethyl)-3-aminopropyltrimethoxysilane, N,N',N'-tris(trimethylsilyl)-N-(2-aminoethyl)-3-aminopropylmethyldimethoxysilane, and of these alkoxysilane compounds containing hydrocarbyloxysilyl group, in a compound in which amino sites are protected with a plurality of trialkylsilyl groups, an alkoxysilane compound in which the plurality of trialkylsilyl groups are partially substituted with a methyl group, an ethyl group, a propyl group or a butyl group;
N-[3-(trimethoxysilyl)-propyl]-N,N'-diethyl-N'-trimethylsilyl-ethane-1,2-diamine, N-[3-(triethoxysilyl)- propyl]-N,N'-diethyl-N'-trimethylsilyl-ethane-1,2-diamine, N-[3-(methyldimethoxysilyl)-propyl]-N,N'-diethyl-N'-trimethylsilyl-ethane-1,2-diamine, N-[3-(methyldimethoxysilyl)-propyl]-N,N'-diethyl-N'-trimethylsilyl-p-phenylenediamine, N-[3-(triethoxysilyl)-propyl]-N,N'-diethyl-N'-trimethylsilyl-p-phenylenediamine, N-[3-(diethoxymethylsilyl)-propyl]-N-ethyl-N'-(2-ethoxyethyl)-N'-trimethylsilyl-ethane-1,2-diamine, N-[3-(tripropoxysilyl)-propyl]-N-propyl-N'-(2-ethoxyethyl)-N'-triethylsilyl-p-phenylenediamine, N-[2-(diethoxymethylsilyl)-1-methylethyl]-N-ethyl-N'-(2-diethylaminoethyl) N'-triethylsilyl-ethane-1,2-diamine, N-[3-(triethoxysilyl)-propyl]-N-ethyl-N'-(2-diethylaminoethyl)-N'-triethylsilyl-ethane-1,2-diamine, N-[2-(trimethoxysilyl)-ethyl]-N,N',N'-trimethylethane-1,2-diamine, N-[2-(dimethoxymethylsilyl)-ethyl]-N-ethyl-N',N'-dimethylethane-1,2-diamine, N-[3-(trimethoxysilyl)-propyl]-N,N',N'-trimethylolpropane-1,3-diamine, N-[3-(dimethoxymethylsilyl)-propyl]-N-ethyl-N',N'-dimethylpropane-1,3-diamine, N-[3-(triethoxysilyl)-propyl]-N,N',N'-triethyl-2-methylpropane-1,3-diamine, N-[3-(dimethoxymethylsilyl)-propyl]-2,N,N',N'-tetramethylpropane-1,3-diamine, N-(2-dimethylaminoethyl)-N'-[2-(trimethoxysilyl)-ethyl]-N,N'-dimethylethane-1,2-diamine, N-[2-(diethoxypropylsilyl)-ethyl]-N'-(3-ethoxypropyl)-N,N'-dimethylethane-1,2-diamine, N-[2-(trimethoxysilyl)-ethyl]-N'-methoxymethyl-N,N'-dimethylethane-1,2-diamine, N-[2-(trimethoxysilyl)-ethyl]-N,N'-dimethyl-N'-(2-trimethylsilylethyl)-ethane-1,2-diamine, N-[2-(triethoxysilyl)-ethyl]-N,N'-diethyl-N'-(2-dibutylmethoxysilylethyl)-ethane-1,2-diamine,
1-(3-triethoxysilylpropyl)-2,2,5,5-tetramethyl-1-aza-2,5-disilacyclopentane, 1-(3-trimethoxysilylpropyl)-2,2,5,5-tetramethyl-1-aza-2,5-disilacyclopentane, 1-(3-methyldiethoxysilylpropyl)-2,2,5,5-tetramethyl-1-aza-2,5-disilacyclopentane, 1-(3-methyldimethoxysilylpropyl)-2,2,5,5-tetramethyl-1-aza-2,5-disilacyclopentane, 1-trimethylsilyl-2,2-dimethoxy-1-aza-2-silacyclopentane, 3-[3-(trimethylsilylethylamino)-1-pyrrolidinyl]-propyl-methyldiethoxysilane, 3-[3-(trimethylsilylpropylamino)-1-pyrrolidinyl]-propyl-triethoxysilane, 3-(4-trimethylsilyl-1-piperazino)propylmethyldimethoxysilane, 3-(4-trimethylsilyl-1-piperazino)propyltriethoxysilane, 3-(4-trimethylsilyl-1-piperazino)propyltributoxysilane, 4-(4-trimethylsilyl-1-piperazinyl)butyltriethoxysilane, 1-[3-(triethoxysilyl)-propyl]-4-methylpiperazine, 1-[3-(diethoxyethylsilyl)-propyl]-4-methylpiperazine, 2-(triethoxysilyl)-1,4-diethylpiperazine, 2-(dimethoxymethylsilyl)-1,4-dimethylpiperazine, 2-(3-triethoxysilyl-propyl)-1,4-diethylpiperazine, 2-(3-dimethoxymethylsilyl-propyl)-1,4-dimethylpiperazine, 3-piperidinopropyltrimethoxysilane, 3-piperidinopropyltriethoxysilane, 3-piperidinopropylmethyldimethoxysilane, 3-piperidinopropylethyldimethoxysilane, 3-piperidinopropylmethyldiethoxysilane, 3-piperidinopropylethyldiethoxysilane, 3-(3-trimethylsilyl-1-imidazolidinyl)propylethyldiethoxysilane, 3-(3-trimethylsilyl-1-imidazolidinyl)propyltriethoxysilane, 1-[3-(trimethoxysilyl)-propyl]-3-methylimidazolidine, 1-[3-(diethoxyethylsilyl)-propyl]-3-ethylimidazolidine, 1-(2-ethoxyethyl)-3-[3-(trimethoxysilyl)-propyl]-imidazolidine, 2-(trimethoxysilyl)-1,3-dimethylimidazolidine, 2-(3-trimethoxysilyl-propyl)-1,3-dimethylimidazolidine, 2-(diethoxysilylethyl)-1,3-diethyl-imidazolidine, 2-[3-(2-dimethylaminoethyl)-2-(ethyldimethoxysilyl)-imidazolidine-1-yl]-ethyl-dimethylamine, 2-(3-diethoxyethylsilyl-propyl)-1,3-diethylimidazolidine, 2-[3-(2-dimethylaminoethyl)-2-(3-ethyldimethoxysilyl-propyl)-imidazolidine-1-yl]-ethyl-dimethylamine, N-(3-trimethoxysilylpropyl)-4,5-dihydroimidazole, N-(3-triethoxysilyl-propyl)-4,5-dihydroimidazole, N-(3-trimethoxysilylpropyl)-4,5-imidazole, N-(3-triethoxy-silylpropyl)-4,5-imidazole,
3-(3-trimethylsilyl-1-hexahydropyrimidinyl)propylmethyldimethoxysilane, 3-(3-trimethylsilyl-1-hexahydropyrimidinyl)propyltriethoxysilane, 1-[3-(triethoxysilyl)-propyl]-3-methylhexahydropyrimidine, 1-[3-(dimethoxymethylsilyl)-propyl]-3-methylhexahydropyrimidine, 3-[3-(tributoxysilyl)-propyl]-1-methyl-1,2,3,4-tetrahydropyrimidine, 3-[3-(dimethoxymethylsilyl)-propyl]-1-ethyl-1,2,3,4-tetrahydropyrimidine, 2-{3-[3-(trimethoxysilyl)-propyl]-tetrahydropyrimidine-1-yl}-ethyldimethylamine, 5-(triethoxysilyl)-1,3-dipropylhexahydropyrimidine, 5-(diethoxysilylethyl)-1,3-diethylhexahydropyrimidin, 5-(trimethoxysilyl)-1,3-bis-(2-methoxyethyl)-hexahydropyrimidine, 5-(ethyldimethoxysilanyl)-1,3-bis-trimethylsilanylhexahydro-pyrimidine, 5-(3-triethoxysilyl-propyl)-1,3-dipropylhexahydropyrimidine, 5-(3-diethoxysilylethyl-propyl)-1,3-diethylhexahydropyrimidine, 5-(3-trimethoxysilyl- propyl)-1,3-bis-(2-methoxyethyl)-hexahydropyrimidine, 5-(3-ethyldimethoxysilyl-propyl)-1,3-bis-(2-trimethylsilylethyl)-hexahydropyrimidine,
3-morpholinopropyltrimethoxysilane, 3-morpholinopropyltriethoxysilane, 3-morpholinopropylmethyldimethoxysilane, 3-morpholinopropylethyldimethoxysilane, 3-morpholinopropyldiethoxysilane, 3-morpholinopropylethyldiethoxysilane, 3-hexamethyleneiminopropyltrimethoxysilane, 3-hexamethyleneiminopropyltriethoxysilane, 3-hexamethyleneiminopropylmethyldimethoxysilane, 3-hexamethyleneiminopropylethyl-dimethoxysilane, 3-hexamethyleneiminopropylmethyldiethoxysilane, 3-hexamethyleneiminopropylethyldiethoxysilane, 3-di(t-butyldimethylsilyl)aminopropyltrimethoxysilane, 3-di(t-butyldimethylsilyl)aminopropyltriethoxysilane, 3-di(t-butyldimethylsilyl)aminopropylmethyldimethoxysilane, 3-di(t-butyldimethylsilyl)-aminopropylmethyldiethoxysilane, 3-di(t-butyldimethylsilyl)aminopropyldimethylmethoxysilane, 3-di(t-butyldimethylsilyl)amino-propyldimethylethoxysilane, N-(1,3-dimethylbutylidene)-3-(trimethoxysilyl)-1-propane-amine, N-(cyclohexylidene)-3-(trimethoxysilyl)-1-propaneamine, N-(cyclohexylidene)-3-(methyldiethoxysilyl)-1-propaneamine, N-(cyclohexylidene)-3-(ethyldimethoxysilyl)-1-propaneamine, [(3-methyl-3-ethylamino)propyl]trimethoxysilane, [(3-methyl-3-ethylamino)propyl]triethoxysilane, P,P-bis(trimethylsilyl)phosphinopropylmethyldi-methoxysilane, P,P-bis(trimethylsilyl)phosphinopropyltrimethoxysilane, P,P-bis-(trimethylsilyl)phosphinopropyltriethoxysilane, P,P-bis(trimethylsilyl)phosphinopropyl-methyldiethoxysilane, P,P-bis(trimethylsilyl)phosphinoethyltrimethoxysilane, P,P-bis(trimethylsilyl)phosphinoethyltriethoxysilane, P,P-bis(trimethylsilyl)phosphino-ethylmethyldimethoxysilane, P,P-bis(trimethylsilyl)phosphinoethylmethyldiethoxysilane,
3-dimethylphosphinopropyltrimethoxysilane, 3-diethyl-phosphinopropyltrimethoxysilane, 3-dimethylphosphinopropyltriethoxysilane, 3-diethylphosphinopropyltriethoxysilane, 3-ethylmethylphosphinopropyltrimethoxysilane, 3-ethylmethylphosphinopropyltriethoxysilane, 3-dimethylphosphinopropyl-methyldimethoxysilane, 3-diethylphosphinopropylmethyldimethoxysilane, 3-dimethylphosphinopropylethyldimethoxysilane, 3-diethylphosphinopropylethyldi-methoxysilane, 3-dimethylphosphinopropyldimethylmethoxysilane, 3-dimethylphosphino-propyldiethylmethoxysilane, 3-diethylphosphinopropyldimethylmethoxysilane, 3-diethyl-phosphinopropyldiethylmethoxysilane, 3-ethylmethylphosphinopropylmethyldimethoxy-silane, 3-ethylmethylphosphinopropylethyldimethoxysilane, 3-dimethylphosphino-propylmethyldiethoxysilane, 3-diethylphosphinopropylmethyldiethoxysilane, 3-dimethylphosphinopropylethyldiethoxysilane, 3-diethylphosphinopropylethyldiethoxysilane, 3-dimethylphosphinopropyldimethylethoxysilane, 3-dimethyl-phosphinopropyldiethylethoxysilane, 3-diethylphosphinopropyldimethylethoxysilane, 3-diethylphosphinopropyldiethylethoxysilane, 3-ethylmethylphosphinopropylmethyldi-ethoxysilane, 3-ethylmethylphosphinopropylethyldiethoxysilane, 3-diphenylphosphinopropyltrimethoxysilane, 3-diphenylphosphinopropyltriethoxysilane, 3-diphenylphosphinopropylmeryldimethoxysilane, 3-diphenylphosphinopropylmeryl-diethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, S-trimethyl-silylmercaptoethyltrimethoxysilane, S-trimethylsilylmercaptoethyltriethoxysilane, S-trimethylsilylmercaptoethylmethyldimethoxysilane and S-trimethylsilylmercaptoethyl-methyldiethoxysilane.

Of these, N,N-bis(triethylsilyl)aminopropylmethyldimethoxysilane, N,N-bis(trimethylsilyl)aminopropylmethyldimethoxysilane, N,N-bis(trimethylsilyl)aminopropylmethyldiethoxysilane, N,N-bis(trimethylsilyl)aminopropyltriethoxysilane, 1-(3-triethoxysilylpropyl)-2,2,5,5-tetramethyl-1-aza-2,5-disilacyclopentane, N,N',N'-tris(trimethylsilyl)-N-(2-aminoethyl)-3-aminopropyltriethoxysilane, 1-trimethylsilyl-2,2-dimethoxy-1-aza-2-silacyclopentane, N-[3-(trimethoxysilyl)-propyl]-N,N'-diethyl-N'-trimethylsilyl-ethane-1,2-diamine, N-[3-(triethoxysilyl)-propyl]-N,N'-diethyl-N'-trimethylsilyl-ethane-1,2-diamine, 3-(4-trimethylsilyl-1-piperazino)propyltriethoxysilane, N-[2-(trimethoxysilyl)-ethyl]-N,N',N'-trimethylethane-1,2-diamine, 1-[3-(triethoxysilyl)-propyl]-4-methylpiperazine, 2-(trimethoxysilyl)-1,3-dimethylimidazolidine, 2-(3-trimethoxysilyl-propyl)-1,3-dimethylimidazolidine, 3-dimethylaminopropyltrimethoxysilane, 3-diethylaminopropyltrimethoxysilane, 3-dimethylaminopropyltriethoxysilane, 3-diethyl-aminopropyltriethoxysilane, bis[3-(triethoxysilyl)propyl]trimethylsilylamine, bis[3-(trimethoxysilyl)propyl]trimethylsilylamine, N-(1,3-dimethylbutylidene)-3-(triethoxysilyl)-1-propaneamine, N-(1-methylpropylidene)-3-(triethoxysilyl)-1-propaneamine, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, bis-(3-dimethylaminopropyl)-dimethoxysilane, [3-(diethylamino)propyl]-trimethoxysilane, [3-(dimethylamino)propyl]triethoxysilane, 3-diphenylphosphinopropyltri-methoxysilane, 3-diphenylphosphinepropyltriethoxysilane, S-trimethylsilylmercaptopropylmethyldimethoxysilane, S-trimethylsilylmercaptopropyltrimethoxysilane, S-trimethylsilyl-mercaptopropyltriethoxysilane and S-trimethylsilylmercaptopropylmethyldiethoxysilane are preferable.

Further, specific examples of the monomers containing a specific functional group(s) include, for example, 1-(4-N,N-dimethylaminophenyl)-1-phenylethylene, 1-(4-N,N-diethylaminophenyl)-1-phenylethylene, 1-(4-N,N-dipropylaminophenyl)-1-phenylethylene, 1-(4-N,N-dibutylaminophenyl)-1-phenylethylene, 1-(4-N,N-dimethoxyaminophenyl)-1-phenylethylene, 1-(4-N,N-diethoxyaminophenyl)-1-phenylethylene, 1-(4-N,N-dipropoxyaminophenyl)-1-phenylethylene, 1-(4-N,N-dibutoxyaminophenyl)-1-phenylethylene and the like. Of these, 1-(4-N,N-dimethylaminophenyl)-1-phenylethylene is preferable from the viewpoint that fuel efficiency is significantly improved.

In such conjugated diene polymer containing a specific functional group(s), the 1,2-vinyl bond content in structural unit derived from a conjugated diene compound is preferably from 30 to 70 mol%. When the 1,2-vinyl bond content is excessively small, there is a possibility that a balance between wet grip performance and rolling resistance in the rubber elastic body obtained from the rubber composition is deteriorated. On the other hand, when the 1,2-vinyl bond content is excessively large, there is a possibility that abrasion resistance of the rubber elastic body obtained from the rubber composition is extremely small.

Herein, the 1,2-vinyl bond content in structural unit derived from the conjugated diene compound can be calculated from a 500 MHz, ¹H-NMR spectrum.

### <Component (B)>

The acylate compound containing metal as component (B) has a function of condensing silanol groups in silica described later. Although it is not particularly limited, it is preferable that such an acylate compound containing metal is a compound represented by the following formula (1) or the following formula (2):

Formula (1): M¹-(OCOR¹)ₙ

(In the Formula (1), M¹ represents a divalent to tetravalent metal atom, R¹ represents a hydrocarbon group having 1 to 20 carbon atoms, and n is an integer of 2 to 4.)

Formula (2): O=M²-(OCOR²)₂

(In the Formula (2), M² represents a tetravalent metal atom, and R² represents a hydrocarbon group having 1 to 20 carbon atoms.)

In formula (1) and formula (2), it is preferable that the metal elements represented by M¹ and M² are metal elements contained in groups 4, 8, 12, 13, 14 and 15 in the periodic table, and preferred specific examples of such metal elements include titanium, iron, zirconium, aluminum, bismuth, tin and the like.

Specific examples of the acylate compounds containing metal represented by formula (1) include acylate compounds in which M¹ is tetravalent titanium, such as titanium tetrakis(2-ethylhexanoate), titanium tetrakis(laurate), titanium tetrakis(naphthate), titanium tetrakis(stearate), titanium tetrakis(oleate) and titanium tetrakis(linoleate),
acylate compounds in which M¹ is trivalent iron, such as iron tris(2-ethylhexanoate), iron tris(laurate), iron tris(naphthate), iron tris(stearate), iron tris(oleate) and iron tris(linoleate),
acylate compounds in which M¹ is tetravalent zirconium, such as zirconium tetrakis(2-ethylhexanoate), zirconium tetrakis(laurate), zirconium tetrakis(naphthate), zirconium tetrakis(stearate), zirconium tetrakis(oleate) and zirconium tetrakis(linoleate),
acylate compounds in which M¹ is trivalent aluminum, such as aluminum tris(2-ethylhexanoate), aluminum tris(laurate), aluminum tris(naphthate), aluminum tris(stearate), aluminum tris(oleate) and aluminum tris(linoleate),
acylate compounds in which M¹ is trivalent bismuth, such as bismuth tris(2-ethylhexanoate), bismuth tris(laurate), bismuth tris(naphthate), bismuth tris(stearate), bismuth tris(oleate) and bismuth tris(linoleate),
acylate compounds in which M¹ is divalent tin, such as tin bis(n-octanoate), tin bis(2-ethylhexanoate), tin dilaurate, tin dinaphthenate, tin distearate and tin dioleate, and the like.

Of these, iron tris(2-ethylhexanoate), bismuth tris(2-ethylhexanoate), aluminum tris(2-ethylhexanoate), aluminum tris(stearate) and tin bis(2-ethylhexanoate) are preferable.

Specific examples of the acylate compounds containing metal represented by formula (2) include acylate compounds in which M² is tetravalent titanium, such as titanium oxide bis(2-ethylhexanoate), titanium oxide bis(laurate), titanium oxide bis(naphthate), titanium oxide bis(stearate), titanium oxide bis(oleate) and titanium oxide bis(linolate),
acylate compounds in which M² is tetravalent zirconium, such as zirconium oxide bis(2-ethylhexanoate), zirconium oxide bis(laurate), zirconium oxide bis(naphthate), zirconium oxide bis(stearate), zirconium oxide bis(oleate) and zirconium oxide bis(linolate), and the like.

Of these, zirconium oxide bis(2-ethylhexanoate) and zirconium oxide bis(oleate) are preferable.

Specific examples of the acylate compounds containing metal other than the compounds represented by formula (1) and the compounds represented by formula (2) include dibutyltin diacetate, dibutyltin bis(n-octanoate), dibutyltin (2-ethylhexanoate), dibutyltin dilaurate, dibutyltin maleate, dibutyltin bis(benzylmaleate), dibutyltin bis(2-ethylhexylmaleate), di-n-octyltin diacetate, di-n-octyltin bis(n-octanoate), di-n-octyltin bis(2-ethylhexanoate), di-n-octyltin dilaurate, di-n-octyltin maleate, di-n-octyltin bis(benzylmaleate), di-n-octyltin bis(2-ethylhexylmaleate) and the like. Of these, di-n-octyltin bis(2-ethylhexylmaleate) is preferable.

The content of such component (B) is preferably from 0.5 to 5 parts by mass based on 100 parts by mass of component (C) composed of silica. When the content of component (B) is excessively small, the improvement width of impact resilience becomes small. On the other hand, when the content of component (B) is excessively large, there is a possibility that thermal stability is deteriorated.

### <Component (C)>

In the rubber composition of the present invention, component (C) composed of granular silica as a filler is usually contained. Although this silica may be any as long as it is generally used as the filler, synthetic silicic acid having a primary particle size of 50 nm or less is preferable.

The content of such component (C) is preferably from 20 to 100 parts by mass based on 100 parts by mass of the total of component (A) and component (D) described later. When the content of component (C) is either excessively small or excessively large, a balance between hardness and rolling resistance is deteriorated.

### <Component (D)>

In the rubber composition of the present invention, a polymer (hereinafter referred to as a "specific functional group-free polymer") having no specific functional group as component (D) constitutes the rubber component, together with the conjugated diene polymer containing a specific functional group(s) as component (A).

As such a specific functional group-free polymer, natural rubber, butadiene rubber, synthetic isoprene rubber, styrene-butadiene rubber or the like can be used.

The content of such component (D) is preferably 40 parts by mass or less, and more preferably from 10 to 35 parts by mass, based on 100 parts by mass of the total of component (A) and component (D). When the content of component (D) is excessively large, there is a possibility that rolling resistance is deteriorated.

### <Other Components>

In the rubber composition of the present invention, other components may be contained in addition to the above-mentioned component (A) to component (D), according to necessity. Such other components include reinforcing agents such as carbon black, softening agents such as oil, silane coupling agents, waxes, antioxidants, stearic acid, zinc oxide, vulcanizing agents or crosslinking agents such as sulfur, vulcanization accelerators and the like.

### <Rubber Composition>

The rubber composition of the present invention can be prepared by kneading the above-mentioned respective components, for example, using a kneader such as a plastomill, a Banbury mixer, a roll mill or an internal mixer. However, it is an aspect of the invention to knead the specific functional group-free polymer as component (D), a part or the whole of silica as component (C) and the acylate compound containing metal as component (B) (this step is hereinafter referred to as a "first kneading step"), and thereafter to add the conjugated diene polymer containing a specific functional group(s) as component (A) or the conjugated diene polymer containing a specific functional group(s) as component (A) and the remainder of silica as component (C) to the resulting kneaded material, followed by kneading (this step is hereinafter referred to as a "second kneading step").

According to such a method, a balance between impact resilience and rolling resistance of a tire obtained is improved.

According to the rubber composition of the present invention, the conjugated diene polymer a containing specific functional group(s) is contained as the rubber component, so that the specific functional group(s) in the conjugated diene polymer containing a specific functional group(s) bonds to the silanol group in silica, thereby improving dispersibility of silica. Moreover, since the acylate compound containing metal is contained, the silanol groups in the silica are condensed among the silica, thereby forming the silica aggregate. As a result, silica is suppressed from being excessively dispersed. Therefore, the elastic body having small rolling resistance and moreover excellent impact resilience can be obtained.

Accordingly, the rubber composition of the present invention is suitable as a rubber composition for obtaining a tire tread.

### <Tire>

The tire of the present invention has the tread obtained from the above-mentioned rubber composition. The tire is produced by a usual method using the above-mentioned rubber composition.

Namely, for example, the rubber composition (uncrosslinked rubber composition) of the present invention is extruded according to the shape of the tire to be molded (specifically, the shape of the tread) to perform molding on a tire molding machine by a usual method, thereby producing an uncrosslinked molded body for tire use. The tread is produced, for example, by heating and pressurizing this uncrosslinked molded body for tire use in a vulcanizing machine. The tread and other parts are assembled, by which the desired tire able to be produced.

Since the tire of the present invention has a tread obtained from the above rubber composition, it has small rolling resistance and moreover excellent impact resilience.

### Examples

Although specific examples of the present invention will be described below, the present invention is not limited to these examples.

In the following Examples and Comparative Examples, measuring methods of various physical property values are described below.
(1) The contained ratio (hereinafter also referred to as the "bonded styrene content") of structural units derived from an aromatic vinyl compound (styrene) in the conjugated diene polymer containing a specific functional group(s):
      Calculated from the 500 MHz, ¹H-NMR spectrum using deuterated chloroform as a solvent.
   (2) The content (hereinafter also referred to as the "vinyl bond content") of 1,2-vinyl bonds in a structural unit derived from a conjugated diene compound in the conjugated diene polymer containing a specific functional group(s):
      Calculated from the 500 MHz, ¹H-NMR spectrum.
   (3) Glass Transition Temperature (Tg):
      Measured by differential scanning calorimetry (DSC) in accordance with ASTM D3418.
   (4) Molecular Weight of Base Polymer Involved in Conjugated Diene Polymer Containing a Specific Functional Group(s):
      Measurement was carried out by gel permeation chromatography (GPC), "HLC-8120GPC" (manufactured by Tosoh Corporation) under the following conditions, and the polystyrene-converted weight average molecular weight (Mw) was determined from the retention time corresponding to the maximum peak height of a GPC curve obtained.

### (GPC Conditions)

Column: Trade name "GMHHXL" (manufactured by Tosoh Corporation), 2 columns
Column temperature: 40°C
Mobile phase: Tetrahydrofuran
Flow rate: 1.0 ml/min
Sample concentration: 10 mg/20 ml

(5) Mooney Viscosity:
   According to JIS K6300, measurement was carried out using an L-rotor under conditions of preheating for 1 minute, rotor operation for 4 minutes and a temperature of 100°C.

### [Synthesis of Conjugated Diene Polymer Containing a Specific Functional Group(s)]

### Synthesis Example 1:

First, in an autoclave reactor having an internal volume of 5 liters in which the atmosphere was replaced with nitrogen, 2,750 g of cyclohexane as a solvent, 50 g of tetrahydrofuran as an adjuster for adjusting the vinyl bond content, and 125 g of styrene and 375 g of 1,3-butadiene as monomers were charged. After adjusting the temperature in the reactor to 10°C, a cyclohexane solution containing 5.80 mmol of n-butyllithium as a polymerization initiator was added to initiate polymerization. The polymerization was conducted under adiabatic conditions, and the maximum temperature reached 85°C.

After confirmation that the polymerization conversion reached 99%, the polymerization was further conducted for 5 minutes from the time when the polymerization conversion reached 99%. Thereafter, 10 g was collected from a reaction solution obtained, namely a polymer solution containing a copolymer composed of a conjugated diene compound and an aromatic vinyl compound, for measurement of the molecular weight (for measurement of the molecular weight of a base polymer).

Then, a cyclohexane solution containing 4.96 mmol of N,N-bis(trimethylsilyl)aminopropylmethyldiethoxysilane (hereinafter referred to as "compound (1) containing a specific functional group(s)") was added to the polymer solution, followed by reaction for 15 minutes. Thereafter, 2 g of 2,6-di-tert-butyl-p-cresol was added to a polymer solution obtained, and further, a desolvation treatment was performed by steam stripping with using hot water adjusted to pH 9 with sodium hydroxide. Then, a drying treatment was performed with a hot roll controlled to 110°C to obtain a conjugated diene polymer containing a specific functional group(s) (hereinafter referred to as "polymer (A1)").

The bonded styrene content, vinyl bond content, glass transition temperature and Mooney viscosity of polymer (A1) obtained and the weight average molecular weight of the base polymer are shown in the following Table 1.

### Synthesis Example 2:

A conjugated diene polymer containing a specific functional group(s) (hereinafter referred to as "polymer (A2)") was obtained in the same manner as in Synthesis Example 1 with the exception that 4.96 mmol of 3-(4-trimethylsilyl-1-piperazino)propyltriethoxysilane (hereinafter referred to as "compound (2) containing a specific functional group(s)") was used in place of the compound (1) containing a specific functional group(s).

The bonded styrene content, vinyl bond content, glass transition temperature and Mooney viscosity of polymer (A2) obtained and the weight average molecular weight of the base polymer are shown in the following Table 1.

### Synthesis Example 3

A conjugated diene polymer containing a specific functional group(s) (hereinafter referred to as "polymer (A3)") was obtained in the same manner as in Synthesis Example 1 with the exception that 4.96 mmol of [3-(dimethylamino)propyltriethoxysilane (hereinafter referred to as "compound (3) containing a specific functional group(s)") was used in place of the compound (1) containing a specific functional group(s).

The bonded styrene content, vinyl bond content, glass transition temperature and Mooney viscosity of polymer (A3) obtained and the weight average molecular weight of the base polymer are shown in the following Table 1.

### Synthesis Example 4 (for Comparison)

A conjugated diene polymer containing a specific functional group(s) (hereinafter referred to as "polymer (A4)") was obtained in the same manner as in Synthesis Example 1 with the exception that 4.96 mmol of methanol was used in place of the compound (1) containing a specific functional group(s).

The bonded styrene content, vinyl bond content, glass transition temperature and Mooney viscosity of polymer (A4) obtained and the weight average molecular weight of the base polymer are shown in the following Table 1.

**[Table 1]**

| | | Synthesis Example 1 | Synthesis Example 2 | Synthesis Example 3 | Synthesis Example 4 |
|---|---|---|---|---|---|
| Raw Material | Styrene (g) | 125 | | | |
| | 1,3-Butadiene (g) | 375 | | | |
| | Compound (1) containing a Specific Functional Group(s) (mmol) | 4.96 | | | |
| | Compound (2) containing a Specific Functional Group(s) (mmol) | | 4.96 | | |
| | Compound (3) containing a Specific Functional Group(s) (mmol) | | | 4.96 | |
| | Methanol (mmol) | | | | 4.96 |
| Property | Bonded Styrene Content (mass%) | 25 | 25 | 25 | 25 |
| | Vinyl Bond Content (mol%) | 56 | 55 | 56 | 55 |
| | Glass Transition Temperature (°C) | -30 | -31 | -30 | -30 |
| | Weight Average Molecular Weight of Base Polymer | 200,000 | 200,000 | 200,000 | 200,000 |
| | Mooney Viscosity | 8 | 28 | 22 | 9 |

### [Example 1]

By using a plastomill (internal volume: 250 cc) equipped with a temperature controller, a rubber composition of the present invention was produced in the following manner.

One part by mass of iron tris(2-ethylhexanoate) as component (B), 84 parts by mass of silica (manufactured by Tosoh Silica Corporation, product name: "Nipsil AQ", primary average particle size: 15 nm) as component (C), 30 parts by mass of butadiene rubber (manufactured by JSR Corporation, product name: "BR01") as component (D), 45 parts by mass of an extender oil (manufactured by Sankyo Yuka Kogyo K.K., product name: "SNH46"), 6.7 parts by mass of carbon black, 10 parts by mass of a silane coupling agent (manufactured by Degussa AG, product name: "Si69"), 2.4 parts by mass of stearic acid, 1.2 parts by mass of an antioxidant (manufactured by Ouchi Shinko Chemical Industrial Co., Ltd., product name: "Nocrac 810NA") and 3.6 parts by mass of zinc oxide (zinc white) were kneaded under conditions of a rotation number of 60 rpm and a filling rate of 72% for 5 minutes (the first kneading step). Thereafter, 70 parts by mass of polymer (A-1) was added as component (A) to the resulting kneaded material, followed by kneading under conditions of a rotation number of 60 rpm and a temperature of 120°C for 5 minutes (the second kneading step).

Then, the resulting kneaded material was cooled to room temperature, and thereafter, 2.2 parts by mass of a vulcanization accelerator, "Nocceler CZ" (manufactured by Ouchi Shinko Chemical Industrial Co., Ltd.), 1.8 parts by mass of a vulcanization accelerator, "Nocceler D" (manufactured by Ouchi Shinko Chemical Industrial Co., Ltd.), and 1.8 parts by mass of sulfur were added to the kneaded material, and kneaded under conditions of a rotation number of 60 rpm and a temperature of 80°C for 1 minute to produce a rubber composition. The resulting rubber composition is taken as "rubber composition (1)". Further, the Mooney viscosity of rubber composition (1) is shown in the following Table 2.

### [Example 2]

A rubber composition was produced in the same manner as in Example 1 with the exception that 70 parts by mass of polymer (A2) was used as component (A) in place of polymer (A1). The resulting rubber composition is taken as "rubber composition (2)". Further, the Mooney viscosity of rubber composition (2) is shown in the following Table 2.

### [Example 3]

A rubber composition was produced in the same manner as in Example 1 with the exception that 70 parts by mass of polymer (A3) was used as component (A) in place of polymer (A1). The resulting rubber composition is taken as "rubber composition (3)". Further, the Mooney viscosity of rubber composition (3) is shown in the following Table 2.

### [Example 4]

A rubber composition was produced in the same manner as in Example 1 with the exception that 1 part by mass of bismuth tris(2-ethylhexanoate) was used as component (B) in place of iron tris(2-ethylhexanoate). The resulting rubber composition is taken as "rubber composition (4)". Further, the Mooney viscosity of rubber composition (4) is shown in the following Table 2.

### [Example 5]

A rubber composition was produced in the same manner as in Example 1 with the exception that 1 part by mass of zirconium oxide bis(2-ethylhexanoate) was used as component (B) in place of iron tris(2-ethylhexanoate). The resulting rubber composition is taken as "rubber composition (5)". Further, the Mooney viscosity of rubber composition (5) is shown in the following Table 2.

### [Comparative Example 1]

A rubber composition was produced in the same manner as in Example 1 with the exception that 1 part of tetraethoxyzirconium was used in place of iron tris(2-ethylhexanoate). The resulting rubber composition is taken as "rubber composition (6)". Further, the Mooney viscosity of rubber composition (6) is shown in the following Table 2.

### [Comparative Example 2]

A rubber composition was produced in the same manner as in Example 1 with the exception that 1 part of tri-n-propoxyaluminum was used in place of iron tris(2-ethylhexanoate). The resulting rubber composition is taken as "rubber composition (7)". Further, the Mooney viscosity of rubber composition (7) is shown in the following Table 2.

### [Comparative Example 3]

A rubber composition was produced in the same manner as in Example 1 with the exception that 1 part of tetrakis(2-ethylhexoxy)titanium was used in place of iron tris(2-ethylhexanoate). The resulting rubber composition is taken as "rubber composition (8)". Further, the Mooney viscosity of rubber composition (8) is shown in the following Table 2.

### [Comparative Example 4]

A rubber composition was produced in the same manner as in Example 1 with the exception that 70 parts by mass of polymer (A4) was used as component (A) in place of polymer (A1). The resulting rubber composition is taken as "rubber composition (9)". Further, the Mooney viscosity of rubber composition (9) is shown in the following Table 2.

### [Comparative Example 5]

A rubber composition was produced in the same manner as in Example 1 with the exception that iron tris(2-ethylhexanoate) was not used. The resulting rubber composition is taken as "rubber composition (10)". Further, the Mooney viscosity of rubber composition (10) is shown in the following Table 2.

### (Evaluation of Rubber Composition)

After molding of rubber composition (1) to rubber composition (10), they were vulcanized under conditions of 160°C by using a vulcanizing press to prepare rubber elastic bodies. For these rubber elastic bodies, the following characteristic evaluations were performed. The results thereof are shown in the following Table 2.

(1) Impact Resilience:
   Using a tripso type impact resilience test (manufactured by Toyo Seiki Seisaku-sho, Ltd.), measurement was made under conditions of 50°C, and the index at the time when the value of the rubber elastic body according to Comparative Example 5 was taken as 100 was determined. The larger value of this index shows the larger and better impact resilience.
(2) Wet Skid Resistance (0°C tan δ):
   Using a dynamic spectrometer (manufactured by US Rheometric Inc.), measurement was carried out under conditions of a tensile dynamic distortion of 0.14%, an angular velocity of 100 radians per second and a temperature of 0°C, and the index at the time when the value of the rubber elastic body according to Comparative Example 5 was taken as 100 was determined. The larger value of this index shows the larger and better wet skid resistance.
(3) Low Hysteresis Loss Property (70°C tan δ):
   Using a dynamic spectrometer (manufactured by US Rheometric Inc.), measurement was carried out under conditions of a tensile dynamic distortion of 0.7%, an angular velocity of 100 radians per second and a temperature of 70°C, and the index at the time when the value of the rubber elastic body according to Comparative Example 5 was taken as 100 was determined. The larger value of this index shows the larger and better low hysteresis loss property.

**[Table 2]**

| | | Example 1 | Example 2 | Example 3 | Example 4 | Example 5 | Comparative Example 1 | Comparative Example 2 | Compa rative Example 3 | Comparative Example 4 | Comparative Example 5 |
|---|---|---|---|---|---|---|---|---|---|---|---|
| | Polymer (A1) (parts by mass) | 70 | | | 70 | 70 | 70 | 70 | 70 | | 70 |
| | Polymer (A2) (parts by mass) | | 70 | | | | | | | | |
| | Polymer (A3) (parts by mass) | | | 70 | | | | | | | |
| | Polymer (A4) (parts by mass) | | | | | | | | | 70 | |
| | Butadiene Rubber (parts by mass) | 30 | 30 | 30 | 30 | 30 | 30 | 30 | 30 | 30 | 30 |
| | Iron Tris(2-ethylhexanoate) (parts by mass) | 1 | 1 | 1 | | | | | | 1 | |
| | Bismuth Tris(2-ethylhexanoate) (parts by mass) | | | | 1 | | | | | | |
| Formulation of Rubber Composition | Zirconium oxide bis(2-ethylhexanoate) (parts by mass) | | | | | 1 | | | | | |
| | Tetraethoxyzirconium (parts by mass) | | | | | | 1 | | | | |
| | Tri-n-propoxyaluminium (parts by mass) | | | | | | | 1 | | | |
| | Tetrakis(2-ethylhexoxy)titanium (parts by mass) | | | | | | | | 1 | | |
| | Silica (parts by mass) | 84 | 84 | 84 | 84 | 84 | 84 | 84 | 84 | 84 | 84 |
| | Carbon Black (parts by mass) | 6.7 | 6.7 | 6.7 | 6.7 | 6.7 | 6.7 | 6.7 | 6.7 | 6.7 | 6.7 |
| | Extender Oil (parts by mass) | 45 | 45 | 45 | 45 | 45 | 45 | 45 | 45 | 45 | 45 |
| | Silane Coupling Agent (parts by mass) | 10 | 10 | 10 | 10 | 10 | 10 | 10 | 10 | 10 | 10 |
| | Stearic Acid (parts by mass) | 2.4 | 2.4 | 2.4 | 2.4 | 2.4 | 2.4 | 2.4 | 2.4 | 2.4 | 2.4 |
| | Antioxidant (parts by mass) | 1.2 | 1.2 | 1.2 | 1.2 | 1.2 | 1.2 | 1.2 | 1.2 | 1.2 | 1.2 |
| | Zinc Oxide (parts by mass) | 3.6 | 3.6 | 3.6 | 3.6 | 3.6 | 3.6 | 3.6 | 3.6 | 3.6 | 3.6 |
| | VulcanizationAccelerator "Nocceler CZ" (parts by mass) | 2.2 | 2.2 | 2.2 | 2.2 | 2.2 | 2.2 | 2.2 | 2.2 | 22 | 2.2 |
| | VulcanizationAccelerator "Nocceler D" (parts by mass) | 1.8 | 1.8 | 1.8 | 1.8 | 1.8 | 1.8 | 1.8 | 1.8 | 1.8 | 1.8 |
| | Sulfur (parts by mass) | 1.8 | 1.8 | 1.8 | 1.8 | 1.8 | 1.8 | 1.8 | 1.8 | 1.8 | 1.8 |
| Evaluation Results | Mooney Viscosity | 76 | 74 | 68 | 76 | 72 | 72 | 74 | 72 | 71 | 74 |
| | Impact Resilience | 128 | 123 | 118 | 123 | 121 | 109 | 105 | 108 | 86 | 100 |
| | Wet Skid Resistance (0°C tan δ) | 122 | 115 | 110 | 120 | 115 | 106 | 105 | 103 | 80 | 100 |
| | Low Hysteresis Loss Property (70°C tan δ) | 120 | 114 | 108 | 119 | 116 | 104 | 108 | 105 | 86 | 100 |

As apparent from the results of Table 2, it has bee confirmed that the rubber elastic bodies having small rolling resistance and moreover excellent impact resilience are obtained according to the rubber compositions of Examples 1 to 5.

## Claims

1. A method for producing a rubber composition comprising kneading a rubber component comprising a conjugated diene polymer having a functional group bondable to silica, an acylate compound containing metal and silica, wherein a polymer having no functional group bondable to silica is kneaded as a rubber component other than the conjugated diene polymer, together with the conjugated diene polymer having a functional group bondable to silica, the acylate compound containing metal and the silica, and wherein the polymer having no functional group bondable to silica, a part or the whole of the silica used and the acylate compound containing metal are kneaded, and thereafter the conjugated diene polymer having a functional group bondable to silica is added thereto, followed by kneading.

2. The method for producing a rubber composition according to claim 1, wherein the functional group bondable to silica in the conjugated diene polymer is at least one group selected from the group consisting of a hydrocarbyloxysilyl group, a primary amino group, a secondary amino group, a tertiary amino group, a thiol group, an epoxy group, a thioepoxy group, an oxetane group, a hydrocarbylthio group and a group that can form an onium with an onium-forming agent.

3. The method for producing a rubber composition according to claim 1 or 2, wherein the acylate compound containing metal is a compound represented by the following formula (1) or the following formula (2):
Formula (1): M¹-(OCOR¹)ₙ
(In the Formula (1), M¹ represents a divalent to tetravalent metal atom, R¹ represents a hydrocarbon group having 1 to 20 carbon atoms, and n is an integer of 2 to 4.),
Formula (2): O=M²-(OCOR²)₂
(In the Formula (2), M² represents a tetravalent metal atom, and R² represents a hydrocarbon group having 1 to 20 carbon atoms.)

4. A rubber composition obtained by kneading a rubber component comprising a conjugated diene polymer having a functional group bondable to silica, an acylate compound containing metal and silica, wherein the rubber composition is obtained by kneading a polymer having no functional group bondable to silica, as a rubber component other than the conjugated diene polymer, a part or the whole of the silica used and the acylate compound containing metal, and thereafter adding thereto the conjugated diene polymer having a functional group bondable to silica, followed by kneading.

5. The rubber composition according to claim 4, wherein the functional group bondable to silica in the conjugated diene polymer is at least one group selected from the group consisting of a hydrocarbyloxysilyl group, a primary amino group, a secondary amino group, a tertiary amino group, a thiol group, an epoxy group, a thioepoxy group, an oxetane group, a hydrocarbylthio group and a group that can form an onium with an onium-forming agent.

6. The rubber composition according to claim 4 or 5, wherein the acylate compound containing metal is a compound represented by the following formula (1) or the following formula (2):
Formula (1): M¹-(OCOR¹)ₙ
(In the Formula (1), M¹ represents a divalent to tetravalent metal atom, R¹ represents a hydrocarbon group having 1 to 20 carbon atoms, and n is an integer of 2 to 4.),
Formula (2): O=M²-(OCOR²)₂
(In the Formula (2), M² represents a tetravalent metal atom, and R² represents a hydrocarbon group having 1 to 20 carbon atoms.)

7. A tire comprising a tread obtained from the rubber composition according to any one of claims 4 to 6.

## Patentansprüche

1. Verfahren zum Herstellen einer Kautschukzusammensetzung, umfassend das Kneten eines Kautschukbestandteils, umfassend ein konjugiert-Dien-Polymer mit einer funktionellen Gruppe, die an Siliziumoxid gebunden werden kann, einer Acrylatverbindung, die ein Metall enthält, und Siliziumoxid, wobei ein Polymer ohne funktionelle Gruppe, die an Siliziumoxid gebunden werden kann, eingeknetet wird als ein Kautschukbestandteil, der sich von dem konjugiert-Dien-Polymer unterscheidet, gemeinsam mit dem konjugiert-Dien-Polymer mit einer funktionellen Gruppe, die an Siliziumoxid gebunden werden kann, der Acrylatverbindung, die ein Metall enthält, und dem Siliziumoxid, und wobei das Polymer ohne funktionelle Gruppe, die an Siliziumoxid gebunden werden kann, ein Teil oder das Ganze des verwendeten Siliziumoxids und die Acrylatverbindung, die ein Metall enthält, geknetet werden, und danach das konjugiert-Dien-Polymer mit einer funktionellen Gruppe, die an Silizium gebunden werden kann, dazugegeben wird, gefolgt von Kneten.

2. Verfahren zum Herstellen einer Kautschukzusammensetzung nach Anspruch 1, wobei die funktionelle Gruppe, die an Siliziumoxid gebunden werden kann, in dem konjugiert-Dien-Polymer zumindest eine Gruppe ist ausgewählt aus der Gruppe bestehend aus einer Hydrocarbyloxysilylgruppe, einer primären Aminogruppe, einer sekundären Aminogruppe, einer tertiären Aminogruppe, einer Thiolgruppe, einer Epoxygruppe, einer Thioepoxygruppe, einer Oxetangruppe, einer Hydrocarbylthiogruppe und einer Gruppe, die ein Onium mit einem Onium-bildenden Mittel bilden kann.

3. Verfahren zum Herstellen einer Kautschukzusammensetzung nach Anspruch 1 oder 2, wobei die Acrylatverbindung, die ein Metall enthält, eine Verbindung ist, die durch die folgende allgemeine Formel (1) oder die folgende Formel (2) dargestellt ist:
Formel (1): M¹-(OCOR¹)ₙ
(in der Formel (1) stellt M¹ ein zweiwertiges bis vierwertiges Metallatom dar, R¹ stellt eine Kohlenwasserstoffgruppe mit 1 bis 20 Kohlenstoffatomen dar, und n ist eine ganze Zahl von 2 bis 4.),
Formel (2): O=M²-(OCOR²)₂
(in der Formel (2) stellt M² ein vierwertiges Metallatom dar, und R² stellt eine Kohlenwasserstoffgruppe mit 1 bis 20 Kohlenstoffatomen dar.)

4. Kautschukzusammensetzung, erhalten durch Kneten eines Kautschukbestandteils, umfassend ein konjugiert-Dien-Polymer mit einer funktionellen Gruppe, die an Siliziumoxid gebunden werden kann, einer Acrylatverbindung, die ein Metall enthält, und Siliziumoxid, wobei die Kautschukzusammensetzung erhalten ist durch Kneten eines Polymers ohne funktionelle Gruppe, die an Siliziumoxid gebunden werden kann, als ein Kautschukbestandteil, der sich von dem konjugiert-Dien-Polymer unterscheidet, einem Teil oder dem Ganzen des verwendeten Siliziumoxids und der Acrylatverbindung, die ein Metall enthält, und danach Zugeben des konjugiert-Dien-Polymer mit einer funktionellen Gruppe, die an Siliziumoxid gebunden werden kann, gefolgt von Kneten.

5. Kautschukzusammensetzung nach Anspruch 4, wobei die funktionelle Gruppe, die an Siliziumoxid gebunden werden kann, in dem konjugiert-Dien-Polymer zumindest eine Gruppe ist ausgewählt aus der Gruppe bestehend aus einer Hydrocarbyloxysilylgruppe, einer primären Aminogruppe, einer sekundären Aminogruppe, einer tertiären Aminogruppe, einer Thiolgruppe, einer Epoxygruppe, einer Thioepoxygruppe, einer Oxetangruppe, einer Hydrocarbylthiogruppe und einer Gruppe, die ein Onium mit einem Onium-bildenden Mittel bilden kann.

6. Kautschukzusammensetzung nach Anspruch 4 oder 5, wobei die Acrylatverbindung, die ein Metall enthält, eine Verbindung ist, die durch die folgende allgemeine Formel (1) oder die folgende Formel (2) dargestellt ist:
Formel (1): M¹-(OCOR¹)ₙ
(in der Formel (1) stellt M¹ ein zweiwertiges bis vierwertiges Metallatom dar, R¹ stellt eine Kohlenwasserstoffgruppe mit 1 bis 20 Kohlenstoffatomen dar, und n ist eine ganze Zahl von 2 bis 4.),
Formel (2): O=M²-(OCOR²)₂
(in der Formel (2) stellt M² ein vierwertiges Metallatom dar, und R² stellt eine Kohlenwasserstoffgruppe mit 1 bis 20 Kohlenstoffatomen dar.)

7. Reifen, umfassend eine Lauffläche, erhalten aus der Kautschukzusammensetzung nach einem der Ansprüche 4 bis 6.

## Revendications

1. Procédé de production d'une composition de caoutchouc comprenant le malaxage d'un composant caoutchouc comprenant un polymère diénique conjugué ayant un groupe fonctionnel pouvant se lier à de la silice, un composé acylate contenant un métal et de la silice, dans lequel un polymère n'ayant pas de groupe fonctionnel pouvant se lier à de la silice est malaxé en tant que composant caoutchouc autre que le polymère diénique conjugué, avec le polymère diénique conjugué ayant un groupe fonctionnel pouvant se lier à de la silice, le composé acylate contenant un métal et de la silice, et dans lequel le polymère n'ayant pas de groupe fonctionnel pouvant se lier à de la silice, une partie ou toute la silice utilisée et le composé acylate contenant un métal sont malaxés et ensuite le polymère diénique conjugué ayant un groupe fonctionnel pouvant se lier à de la silice est ajouté au mélange, suivi par un malaxage.

2. Procédé de production d'une composition de caoutchouc selon la revendication 1, dans lequel le groupe fonctionnel pouvant se lier à de la silice dans le polymère diénique conjugué est au moins un groupe choisi dans le groupe constitué par un groupe hydrocarbyloxysilyle, un groupe amino primaire, un groupe amino secondaire, un groupe amino tertiaire, un groupe thiol, un groupe époxy, un groupe thioépoxy, un groupe oxétane, un groupe hydrocarbylthio et un groupe qui peut former un onium avec un agent de formation d'onium.

3. Procédé de production d'une composition de caoutchouc selon la revendication 1 ou 2, dans lequel le composé acylate contenant un métal est un composé représenté par la formule
(1) suivante ou la formule (2) suivante :
Formule (1) : M¹-(OCOR¹)ₙ
(dans la formule (1), M¹ représente un atome métallique divalent à tétravalent, R¹ représente un groupe hydrocarboné ayant de 1 à 20 atomes de carbone, et n est un nombre entier de 2 à 4),
Formule (2) : O=M²-(OCOR²)₂
(dans la formule (2), M² représente un atome de métal tétravalent, et R² représente un groupe hydrocarboné ayant de 1 à 20 atomes de carbone).

4. Composition de caoutchouc obtenue par malaxage d'un composant caoutchouc comprenant un polymère diénique conjugué ayant un groupe fonctionnel pouvant se lier à de la silice, un composé acylate contenant un métal et de la silice, dans laquelle la composition de caoutchouc est obtenue par malaxage d'un polymère n'ayant pas de groupe fonctionnel pouvant se lier à de la silice, en tant que composant caoutchouc autre que le polymère diénique conjugué, d'une partie ou de toute la silice utilisée et du composé acylate contenant un métal, et ajout ensuite à ce mélange du polymère diénique conjugué ayant un groupe fonctionnel pouvant se lier à de la silice, suivi par un malaxage.

5. Composition de caoutchouc selon la revendication 4, dans laquelle le groupe fonctionnel pouvant se lier à de la silice dans le polymère diénique conjugué est au moins un groupe choisi dans le groupe constitué par un groupe hydrocarbyloxysilyle, un groupe amino primaire, un groupe amino secondaire, un groupe amino tertiaire, un groupe thiol, un groupe époxy, un groupe thioépoxy, un groupe oxétane, un groupe hydrocarbylthio et un groupe qui peut former un onium avec un agent de formation d'onium.

6. Composition de caoutchouc selon la revendication 4 ou 5, dans laquelle le composé acylate contenant un métal est un composé représenté par la formule (1) suivante ou la formule (2) suivante :
Formule (1) : M¹-(OCOR¹)ₙ
(dans la formule (1), M¹ représente un atome métallique divalent à tétravalent, R¹ représente un groupe hydrocarboné ayant de 1 à 20 atomes de carbone, et n est un nombre entier de 2 à 4),
Formule (2) : O=M²-(OCOR²)₂
(dans la formule (2), M² représente un atome de métal tétravalent, et R² représente un groupe hydrocarboné ayant de 1 à 20 atomes de carbone).

7. Pneu comprenant une bande de roulement obtenu à partir de la composition de caoutchouc selon l'une quelconque des revendications 4 à 6.
